# EUROPÄISCHE PATENTANMELDUNG

(11) **EP 2 518 348 A2**
(43) Veröffentlichungstag der Anmeldung: **31.10.2012**
(21) Anmeldenummer: 12165008.9
(22) Anmeldetag: 20.04.2012
(51) Int. Cl.: F16C 29/06

(54) **Konzept für einen Führungswagen einer Linearführung**

(30) Priorität: 29.04.2011 DE 102011017749
(71) Anmelder: Aktiebolaget SKF, 41 550 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(57) **Zusammenfassung**

Die Erfindung betrifft ein Konzept für einen Führungswagen (30; 40) für eine wälzgelagerte Linearführung. Dazu wird zwischen einer Unterschale (21; 21') und einer Oberschale (22; 22') eine Zwischenschale (31; 31'; 41; 41') angeordnet, so dass zwischen der Unterschale (21; 21') und der Zwischenschale (31; 31'; 41; 41') eine erste endlos umlaufende Wälzkörperreihe (23; 23') angeordnet werden kann, mittels der sich der Führungswagen (20; 30) gegen eine Führungsschiene abstützen kann, und, so dass zwischen der Zwischenschale (31; 31'; 41; 41') und der Oberschale (22; 22') oberhalb der ersten Wälzkörperreihe (23; 23') eine zweite umlaufende Wälzkörperreihe (33; 33') angeordnet werden kann. Ein Führungswagenkörper (24) mit einem Eingriff (25; 25') wird derart angeordnet, so dass mittels des Eingriffs (25; 25') in einem montierten Zustand des Führungswagens (30; 40) ein Lastkanal und ein Rücklaufkanal für die Wälzkörper der ersten und zweiten endlos umlaufenden Wälzkörperreihe (23; 23'; 33; 33') jeweils räumlich voneinander getrennt werden kann.

## Beschreibung

Die Erfindung betrifft einen Führungswagen für eine Linearführung und ein Verfahren zur Herstellung desselben.

Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung in Gleitführungen und Wälzführungen unterteilen. Wälzführungen beruhen auf dem Prinzip der Umwälzung von Wälzkörpern zwischen zwei bewegten Führungselementen. Als Wälzkörper dienen wie beim Wälzlager beispielsweise Kugeln, Rollen, Nadeln oder andere Wälzkörper. Zu den Wälzführungen gehören u. a Profilschienenführungen oder auch Linearführungen. Hierbei sind Linearführungen nicht auf ausschließlich lineare Bewegungen beschränkt. Sie ermöglichen vielmehr eine translatorische Bewegung im Vergleich zu rotatorischen Bewegungen, die durch entsprechende Rotationswälzlager geführt werden. Gerade im Bereich der Linearlager werden die Begriffe "linear" und "translatorisch" daher häufig synonym verwendet.

Mit Hilfe von Linearführungen lassen sich präzise Translationsbewegungen in vielfältigen Anwendungssituationen realisieren. Eine Linearführung weist im Allgemeinen eine Führungsschiene und einen Linear- bzw. Führungswagen auf, der linear beweglich auf der Führungsschiene angeordnet ist. Insbesondere in Anwendungssituationen, bei denen die Amplitude der Linearbewegung in der Größenordnung der Außenabmessungen des Führungswagens parallel zur Bewegungsrichtung liegt oder diese sogar übersteigt werden häufig sogenannte Kugelumlaufführungen eingesetzt. Eine Kugelumlaufführung zeichnet sich dadurch aus, dass der Führungswagen mittels Kugeln relativ zur Führungsschiene beweglich gelagert ist und dass die Kugeln auf einer in sich geschlossenen, also quasi endlosen Bahn umlaufen. Eine Kugelumlaufführung ermöglicht somit eine beliebige lineare Beweglichkeit des Linearwagens, die nur durch die Abmessungen der Führungsschiene und ggf. durch eine Einbauumgebung begrenzt wird

Bei den sogenannten Profilschienenführungen umgreift der Führungswagen, der auch als Laufwagen bezeichnet wird, mit einem im Wesentlichen U-förmigen Querschnitt eine profilierte Führungs- bzw. Profilschiene. Der Führungswagen ist dabei auf der Führungsschiene wälzgelagert. In anderen Worten ausgedrückt bildet der Führungswagen einen äußeren Führungsteil der Linearführung und die Führungsschiene einen inneren Führungsteil der Linearführung, wobei sich inneres und äußeres Führungsteil gegenseitig über Wälzkörper abstützen.

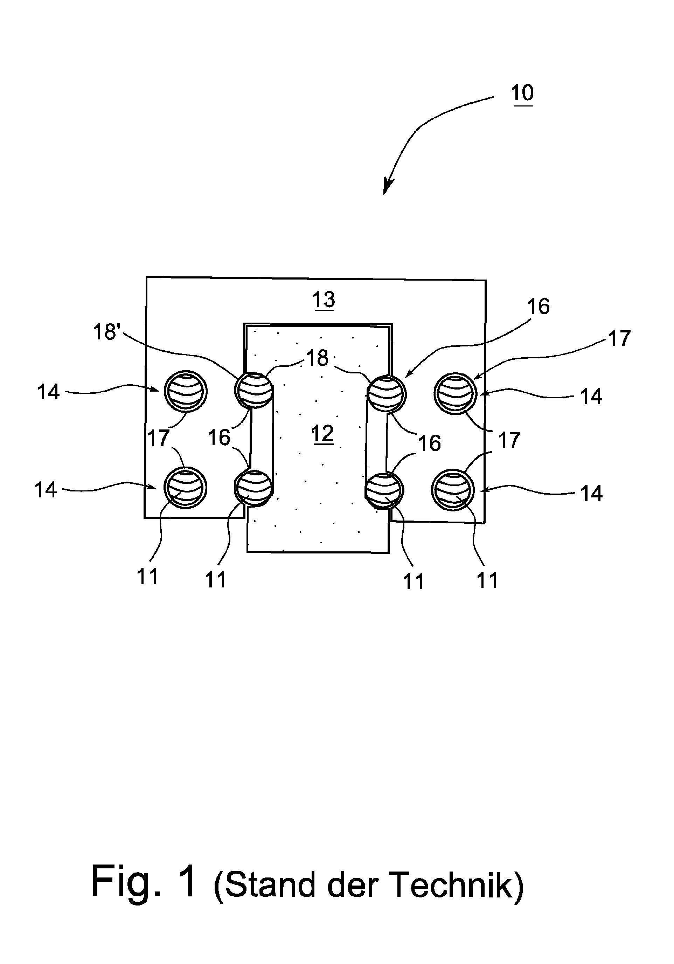

Fig. 1 zeigt zur Veranschaulichung eine schematische Querschnittsdarstellung einer als Profilschienenführung 10 ausgebildeten herkömmlichen Linearführung, bei der beispielsweise als Kugeln ausgebildete Wälzkörper 11 vorgesehen sind.

Die Profilschienenführung 10 umfasst ein als Profilschiene ausgebildetes inneres Führungsteil 12, welches von einem als Führungs- oder Laufwagen 13 ausgebildeten äußeren Führungsteil bügelartig bzw. U-förmig umgriffen wird. In dem in Fig. 1 gezeigten Beispiel stützen sich Führungswagen 13 und Profilschiene 12 über insgesamt vier Wälzkörperreihen 14 gegeneinander ab, wobei sowohl links- als auch rechtsseitig der Profilschiene 12 jeweils zwei Wälzkörperreihen 14 in übereinander angeordneten Wälzkörperumlaufebenen liegen. Linearführungen mit vier Wälzkörperreihen werden im Nachfolgenden als vierreihige Linearführungen bezeichnet. Die Wälzkörperreihen 14 laufen in seitlich der Profilschiene 12 angeordneten und in Längs- oder Verschieberichtung O-förmig umlaufenden Wälzkörperkanälen endlos um. Die Wälzkörperkanäle bestehen jeweils aus einem sogenannten Trag- oder Lastbereich 16, einem Rücklaufbereich 17 und zwei nicht explizit dargestellten stirnseitigen Umlenkbereichen. Die Tragbereiche 16 weisen jeweils eine profilschienenseitige und eine tragkörperseitige Wälzkörperlaufbahn 18, 18' auf, deren Kontur jeweils auf die sphärische Oberfläche der kugelförmigen Wälzkörper 11 angepasst ist. Seitlich können die Kugeln 11 zusammen mit einem sie haltenden Lagerkäfig durch entsprechend ausgebildete Seitenwände der Wälzkörperkanäle 16, 17 geführt werden, so dass ein Querschnittsprofil der Wälzkörperkanäle 16, 17 dem der Kugeln 11 angepasst ist.

Die Rücklaufbereiche 17 können gemäß dem Stand der Technik und so, wie es in Fig. 1 angedeutet ist, beispielsweise durch Bohrungen in dem Führungswagen 13 selbst realisiert werden. Bei der Variante mit Rücklaufbohrungen müssen die Bohrungen durch den massiven Führungswagenkörper 13 jedoch mittels eines aufwendigen Tiefbohrverfahrens, meistens von zwei Seiten aus, hergestellt werden. Dies ist zum einen materialintensiv und teuer, und zum anderen ist ein derartig hergestellter Führungswagen unflexibel hinsichtlich einer Anzahl von Wälzkörperreihen bzw. übereinanderliegender Wälzkörperumlaufebenen. Ein Bedarf an einer größeren Anzahl von Wälzkörperreihen bzw. übereinanderliegender Wälzkörperumlaufebenen kann sich beispielsweise bei einer erhöhten vertikalen Last auf den Führungswagen ergeben.

Demnach besteht eine Aufgabe der vorliegenden Erfindung darin, ein verbessertes und flexibleres Konzept für einen Führungswagen für eine Linearführung bereitzustellen.

Die Erkenntnis der vorliegenden Erfindung besteht darin, zur Lösung dieser Aufgabe einen modularen Aufbau eines Führungswagens vorzusehen. Dazu kann ein Führungswagen modular aus einer Mehrzahl von Einzelteilen zusammengesetzt werden, wobei für eine Grundfunktionalität des Führungswagens zumindest eine Wälzkörperumlaufebene, d. h. links- und rechtsseitig der Profilschiene jeweils eine umlaufende Wälzkörperreihe, vorgesehen ist. Ein derartiger Führungswagen umfasst ein Gehäuse mit einer Unterschale und einer davon separaten Oberschale, zwischen denen in links- und/oder rechtsseitig einer Führungsschiene befindlichen Schalenabschnitten wenigstens eine endlos umlaufende Wälzkörperreihe angeordnet werden kann, mittels der sich der Führungswagen gegen eine Führungsschiene abstützen kann. Ein von den Gehäuseschalen separater Führungswagenkörper bzw. -korpus weist einen Eingriff aus, der ausgebildet ist, um einen Lastkanal und einen Rücklaufkanal für die Wälzkörper der wenigstens einen zwischen der Unter- und Oberschale endlos umlaufenden Wälzkörperreihe räumlich voneinander zu trennen, so dass vermittels der Unterschale, der Oberschale und dem Eingriff des Führungswagenkörpers in montiertem Zustand des Führungswagens wenigstens ein geschlossener Wälzkörperkanal umfassend den Lastkanal, einen Umlenkabschnitt und den Rücklaufkanal für die Wälzkörper der wenigstens einen endlos umlaufenden Wälzkörperreihe gebildet wird.

Der Eingriff kann also zwischen in Längs- oder Verschieberichtung O-förmig in den Unter- und/oder Oberschalen umlaufenden Wälzkörpern z. B. von oben aus derart eingreifen, dass der Eingriff quasi eine Trennwand zwischen Trag- bzw. Lastkanal und Rücklaufkanal der Wälzkörper bildet. Insgesamt weist der Führungswagenkörper einen im Wesentlichen U-förmigen Querschnitt auf, wobei ein Eingriff durch einen oder beide Schenkel des im Wesentlichen U-förmigen Führungswagenkörpers gebildet wird. In dem Führungswagenkörper des modularen Führungswagens sind also nicht, wie in Fig. 1 gezeigt, komplette Wälzkörperkanalbohrungen vorgesehen, sondern vielmehr wird ein Wälzkörperkanal erst durch ein Zusammenwirken von in die Unter-, die Oberschale und den Eingriff eingeformten Wälzkörperkanalabschnitten gebildet, wenn die einzelnen Module zusammengesetzt bzw. montiert werden.

Eine Anpassung der Anzahl umlaufender Wälzkörperreihen bzw. Wälzkörperumlaufebenen kann mit einem derartigen modularen Führungswagenkonzept auf vorteilhafte Weise durch ein Einfügen von zusätzlichen durch Gehäusezwischenschalen gebildeten Zwischenetagen, auf denen links- und/oder rechtsseitig endlos umlaufende Wälzkörperreihen angeordnet werden können, zwischen die Unter- und Oberschale erreicht werden. Dadurch können auf unkomplizierte Weise und bedarfsgerecht weitere Wälzkörperumlaufebenen zwischen Unter- und Oberschale bereitgestellt werden.

Ein derart modular aufgebauter Führungswagen mit wenigstens einer Zwischenschale kann gemäß einem Ausführungsbeispiel mittels eines Verfahrens zum Herstellen/Montieren eines Führungswagens für eine wälzgelagerte Linearführung hergestellt werden. Das Verfahren kann dabei folgende Schritte umfassen:
● Bereitstellen einer Unterschale und einer Oberschale,
● Anordnen, zwischen der Unterschale und der Oberschale, einer Zwischenschale, so dass zwischen der Unterschale und der Zwischenschale eine erste endlos umlaufende Wälzkörperreihe angeordnet werden kann, mittels der sich der Führungswagen gegen eine Führungsschiene abstützen kann, und, so dass zwischen der Zwischenschale und der Oberschale oberhalb der ersten Wälzkörperreihe eine zweite umlaufende Wälzkörperreihe angeordnet werden kann, mittels der sich der Führungswagen gegen die Führungsschiene abstützen kann,
● Anordnen, zwischen der Unterschale und der Zwischenschale, der ersten endlos umlaufenden Wälzkörperreihe, und, zwischen der Zwischenschale und der Oberschale, der zweiten endlos umlaufenden Wälzkörperreihe, und
● Anordnen eines Führungswagenkörpers mit einem Eingriff, so dass mittels des Eingriffs ein Lastkanal und ein Rücklaufkanal für die Wälzkörper der wenigstens einen endlos umlaufenden Wälzkörperreihe räumlich voneinander getrennt wird, so dass vermittels der Unterschale, der Zwischenschale, der Oberschale und dem Eingriff des Führungswagenkörpers in montiertem Zustand wenigstens zwei übereinanderliegende, geschlossene Wälzkörperkanäle für die Wälzkörper der ersten und der zweiten endlos umlaufenden Wälzkörperreihe gebildet werden.

Durch Ausführungsbeispiele des Verfahrens können flexibel Ausführungsbeispiele eines modular aufgebauten Führungswagens für eine wälzgelagerte Linearführung, mit einer Unterschale, einer Oberschale und einer Zwischenschale bereitgestellt werden. Die Zwischenschale ist derart zwischen der Unterschale und der Oberschale angeordnet, dass zwischen der Unterschale und der Zwischenschale eine erste endlos umlaufende Wälzkörperreihe angeordnet werden kann und, so dass zwischen der Zwischenschale und der Oberschale oberhalb der ersten Wälzkörperreihe eine zweite umlaufende Wälzkörperreihe angeordnet werden kann. Der Führungswagen umfasst ferner einen Führungswagenkörper mit einem Eingriff, der ausgebildet ist, um in einem montierten Zustand des Führungswagens einen Lastkanal und einen Rücklaufkanal für die Wälzkörper der ersten und zweiten endlos umlaufenden Wälzkörperreihe räumlich voneinander zu trennen, so dass vermittels der Unterschale, der Zwischenschale, der Oberschale und dem Eingriff des Führungswagenkörpers in montiertem Zustand wenigstens zwei übereinanderliegende, geschlossene Wälzkörperkanäle für die Wälzkörper der ersten und der zweiten endlos umlaufenden Wälzkörperreihe gebildet werden.

Es handelt sich bei Ausführungsbeispielen des Führungswagens also nicht um ein massiven, einstückigen Führungswagen, sondern die Unterschale, die Oberschale, die Zwischenschale und der Führungswagenkörper bilden separate Module des modular aufgebauten Führungswagens, wobei die Unterschale, die Oberschale und die Zwischenschale einem Führungswagengehäuse zuzuordnen sind, welches um den Führungswagenkörper herum montiert werden kann. Die einzelnen Module können dabei form- und/oder kraftschlüssig miteinander gekoppelt sein, beispielsweise mittels entsprechender Clip-, Klemm-, Schnapp- und/oder Schraubverbindungen.

Das vorgestellte Konzept ermöglicht eine relativ einfache Auf- oder Abstockung von Wälzkörperumlaufebenen bei einem Führungswagen einer Linearführung, so dass durch Einfügen von zusätzlichen Zwischenschalen aus einem zweireihigen Führungswagen auf einfache Weise ein vier-, sechs- oder mehrreihiger Führungswagen hergestellt werden kann, und umgekehrt.

Gemäß einem Ausführungsbeispiel kann die Unterschale zwei Unterschalenabschnitte aufweisen, die mittels wenigstens eines Trägerabschnitts mit einem im Wesentlichen U-förmigen Querschnitt miteinander verbunden sind, so dass sich ein erster Unterschalenabschnitt linksseitig und ein zweiter Unterschalenabschnitt rechtsseitig entlang der Führungs-bzw. Profilschiene der wälzgelagerten Linearführung in Verschieberichtung erstrecken kann. Die beiden Unterschalenabschnitte entlang der beiden Seiten der Profilschiene dienen jeweils zum Aufnehmen einer endlos umlaufenden Wälzkörperreihe, die darin, in Verschieberichtung gesehen, im Wesentlichen O-förmig umlaufen können.

Dementsprechend kann die Oberschale gemäß Ausführungsbeispielen zwei Oberschalenabschnitte aufweisen, die mittels wenigstens eines Oberschalenträgerabschnitts so miteinander verbunden sein können, dass sich (in montiertem Zustand) ein erster dem ersten Unterschalenabschnitt zugeordneter Oberschalenabschnitt linksseitig und ein zweiter dem zweiten Unterschalenabschnitt zugeordneter Oberschalenabschnitt rechtsseitig entlang der Führungsschiene der wälzgelagerten Linearführung erstreckt, so dass sich zwischen den jeweils einander zugeordneten Unter- und Oberschalenabschnitten dann jeweils mindestens eine endlos umlaufende Wälzkörperreihe befindet, um den Führungswagen links- und rechtsseitig gegen die Führungsschiene abzustützen.

Auf gleiche Weise kann die Zwischenschale gemäß Ausführungsbeispielen zwei Zwischenschalenabschnitte aufweisen, so dass sich (in montiertem Zustand) ein erster dem ersten Unterschalenabschnitt zugeordneter Zwischenschalenabschnitt linksseitig und ein zweiter dem zweiten Unterschalenabschnitt zugeordneter Zwischenschalenabschnitt rechtsseitig entlang der Führungsschiene der wälzgelagerten Linearführung erstreckt, so dass sich zwischen den jeweils einander zugeordneten Unter-und Zwischenschalenabschnitten dann jeweils eine endlos umlaufende Wälzkörperreihe befindet, um den modularen Führungswagen links- und rechtsseitig gegen die Führungsschiene abzustützen bzw. zu lagern.

In Verschieberichtung kann sich in der Zwischenschale eine längliche Durchlassöffnung erstrecken, die derart dimensioniert ist, dass durch diese bei einer Montage des modularen Führungswagens der Eingriff des Führungswagenkörpers hindurchgeführt werden kann.

Der Führungswagenkörper weist gemäß Ausführungsbeispielen einen im Wesentlichen U-förmigen Querschnitt auf, wobei der Eingriff durch Schenkel des im Wesentlichen U-förmigen Führungswagenkörpers gebildet wird, so dass die Eingriffsschenkel sowohl links- als auch rechtsseitig der Öffnung für die Führungs- bzw. Profilschiene beispielsweise von oben in die Oberschalen und/oder die Zwischenschalen und/oder die Unterschalenabschnitte eingreifen können, um, in montiertem Zustand des Führungswagens, mittels der Eingriffsschenkel sowohl links- als auch rechtsseitig der Führungsschiene einen Lastkanal und einen Rücklaufkanal für die Wälzkörper der wenigstens einen endlos umlaufenden Wälzkörperreihe räumlich voneinander zu trennen.

Um Schmiermittel zu speichern und während des Betriebs kontinuierlich an die in den Wälzkörperkanälen umlaufenden Wälzkörper abzugeben, können die Unter-/ Oberschale bzw. die links- und rechtsseitigen Unter-/Oberschalenabschnitte und/oder die Zwischenschale(nabschnitte) gemäß Ausführungsbeispielen ein entsprechendes Material aufweisen, welches genau diese Funktionen erfüllt. Bei diesem Material könnte es sich beispielsweise um eine poröse Polymer-Matrix handeln, wie zum Beispiel sogenanntes "Solid Oil". Bei einem Vorbeilaufen der Wälzkörper an diesem schmiermittelspeichernden Material kann kontinuierlich für eine ausreichende Schmierung der Wälzkörper und der Wälzkörperkanäle gesorgt werden. Bei vorteilhaften Ausführungsformen sind dieses schmiermittelspeichernde Material aufweisende Abschnitte austauschbar ausgebildet, so dass verbrauchte Schmiermittelreservoirs durch neue ausgetauscht werden können.

Gemäß einem zusätzlichen oder alternativen Ausführungsbeispiel ist die Unterschale und/oder die Zwischenschale und/oder die Oberschale zumindest teilweise aus einem Material gefertigt, welches ausgebildet ist, um die Unterschale und/oder die Zwischenschale gegenüber übrigen Bauteilen des Führungswagens zu verstärken bzw. zu versteifen, wie z. B. einem besonders hartem und belastbaren Kunststoff oder einem Metall (z. B. Alu, Zn-Druckguss, etc.).

Weitere vorteilhafte Ausführungsbeispiele und Weiterbildungen ergeben sich aus den abhängigen Ansprüchen und der nachfolgenden detaillierten Beschreibung der Figuren.

Ein Vorteil der vorliegenden Erfindung besteht darin, dass eine Anpassung der Anzahl umlaufender Wälzkörperreihen bzw. Wälzkörperumlaufebenen mit dem vorgestellten modularen Konzept durch unkompliziertes Einfügen von zusätzlichen (Gehäuse-) Zwischenschalen, auf denen wenigstens eine endlos umlaufende Wälzkörperreihe angeordnet werden kann, zwischen die Unter- und Oberschale erreicht werden kann. Dadurch können modular und bedarfsgerecht weitere Wälzkörperumlaufebenen zwischen Unter- und Oberschale geschaffen werden.

Ausführungsbeispiele, bei denen mit Wälzkörpern in Kontakt stehende Abschnitte in der Unter- und/oder der Zwischen- und/oder der Oberschale vorgesehen sind, die einen schmiermittelspeicherndes Material aufweisen, um dieses an Wälzkörper abgeben zu können, können gegenüber dem Stand der Technik eine vorteilhaftere und einfacher zu handhabende Schmierung der umlaufenden Wälzkörperreihen bewirken. Insbesondere bei Ausführungsformen, bei denen die schmiermittelspeichernden Abschnitte austauschbar ausgeführt sind, ergibt sich ein vorteilhafter synergistischer Effekt zusammen mit der auch sonst modularen Bauweise des Führungswagens.

Ausführungsbeispiele der vorliegenden Erfindung werden nachfolgend bezugnehmend auf die beiliegenden Figuren näher erläutert. Es zeigen:
- Fig. 1: eine schematische Querschnittsdarstellung einer als Profilschienenführung ausgebildeten herkömmlichen Linearführung;
- Fig. 2: eine schematische Querschnittsdarstellung eines Führungswagens für eine zweireihig wälzgelagerte Linearführung gemäß einem Ausführungsbeispiel der vorliegenden Erfindung;
- Fig. 3: eine schematische Querschnittsdarstellung eines Führungswagens für eine vierreihig wälzgelagerte Linearführung gemäß einem weiteren Ausführungsbeispiel der vorliegenden Erfindung;
- Fig. 4: eine schematische Querschnittsdarstellung eines Führungswagens für eine sechsreihig wälzgelagerte Linearführung gemäß einem weiteren Ausführungsbeispiel der vorliegenden Erfindung;
- Fig. 5: eine perspektivische Ansicht von Unterschale, Zwischenschale, Oberschale und Führungsteil mit Eingriff des Führungswagens gemäß Fig. 3;
- Fig. 6: eine perspektivische Ansicht des Führungswagens gemäß Fig. 3 und Fig. 5 in montiertem Zustand; und
- Fig. 7: eine perspektivische Ansicht des Führungswagens gemäß Fig. 4 in montiertem Zustand.

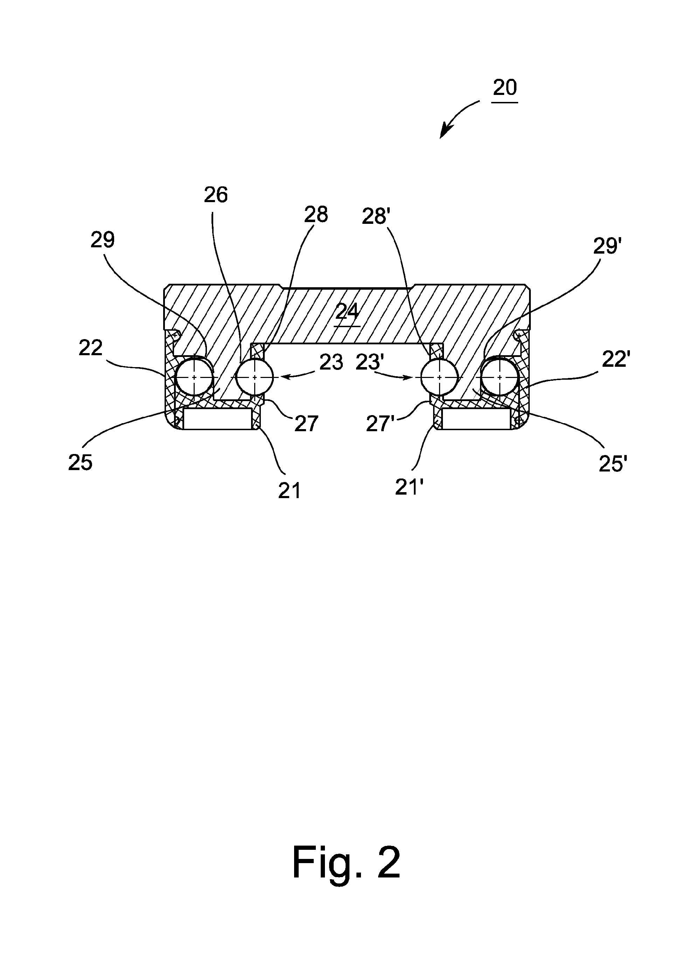

Fig. 2 zeigt eine schematische Querschnittsdarstellung eines modular aufgebauten Führungswagens 20 für eine zweireihig wälzgelagerte Linearführung.

Der modular aufgebaute Führungswagen 20 weist eine Unterschale 21 und eine Oberschale 22 auf, zwischen denen wenigstens eine endlos umlaufende Wälzkörperreihe 23 angeordnet werden kann bzw. angeordnet ist, mittels der sich der Führungswagen 20 gegen eine (in Fig. 2 nicht dargestellte) Führungsschiene der Linearführung abstützen kann. Ferner ist ein Führungswagenkörper 24 vorgesehen mit einem Eingriff 25, der ausgebildet ist, um in montiertem Zustand in die Unter- und/oder Oberschale 21, 22 und in bzw. zwischen die Wälzkörperreihe 23 einzugreifen und somit einen führungsschienenseitigen Trag- bzw. Lastkanal von einem führungsschienenabgewandten Rücklaufkanal für die Wälzkörper der wenigstens einen endlos umlaufenden Wälzkörperreihe 23 räumlich voneinander zu trennen, derart, dass vermittels der Unterschale 21, der Oberschale 22 und dem Eingriff 25 des Führungswagenkörpers 24 in montiertem Zustand des Führungswagens 20 wenigstens ein geschlossener Wälzkörperkanal, umfassend den (führungsschienenseitigen) Lastkanal, einen (nicht dargestellten) Umlenkabschnitt und den (führungsschienenabgewandten) Rücklaufkanal für die Wälzkörper der wenigstens einen endlos umlaufenden Wälzkörperreihe 23, gebildet wird.

Der Führungswagenkörper 24 kann massiv und/oder einstückig aus einem gehärteten Stahl, insbesondere aus einer gleichen Stahlsorte wie die (in Fig. 2 nicht dargestellte) Führungsschiene, gefertigt sein. Ein aus Unter- und Oberschale 21, 22 gebildetes Gehäuse des Führungswagens 20 umgibt den Führungswagenkörper 24 bereichsweise und ist in montiertem Zustand durch Form- und/oder Kraftschluss fest mit dem Führungswagenkörper 24 verbunden. Das Gehäuse, umfassend Unterschale 21 und Oberschale 22, ist gemäß Ausführungsbeispielen mehrteilig (modular) ausgebildet und kann dabei insbesondere aus einem Kunststoff, beispielsweise aus Polyoxymetylen (POM), das auch als Polyacetal bezeichnet wird, gefertigt sein. Weitere geeignete Kunststoffe sind Polyamid (PA), Polyetheretherketon (PEEK), Polytetrafluorethylen (PTFE), Polyethersulfon (PES), Polysulfon (PSU), Polybutylenterephthalat (PBT), Polycarbonat (PC), Acrylnitrilbutadienstyrol (ABS), Polypropylen (PP) usw.

Wie es im Vorhergehenden bereits beschrieben wurde, kann der modular aufgebaute Führungswagen 20 im Allgemeinen einen U-förmigen bzw. bügelartigen Querschnitt aufweisen, um eine Führungs- bzw. Profilschiene entsprechend umgreifen zu können. Dementsprechend kann auch der Führungswagenkörper 24 mit seinem Eingriff 25 einen im Wesentlichen U-förmigen-Querschnitt aufweisen, wobei der Eingriff 25 wenigstens einen Schenkel des U-förmigen Führungswagenkörpers 24 bildet. Im Unterschied zu herkömmlichen Führungswagen weisen die Schenkel 25 des Führungswagenkörpers 24 jedoch keine vollständig ausgebildeten Wälzkörperkanäle, z. B. in Form von Bohrungen, auf. Stattdessen können, wie es in Fig. 2 gezeigt ist, auf einer profilschienenzugewandten Seite eines Eingriffsschenkels 25 an eine Wälzkörpergeometrie angepasste rinnenartige Vertiefungen 26 vorgesehen sein, um damit die Wälzkörper der profilschienenseitig umlaufenden und belasteten Wälzkörperreihe 23 führen zu können.

Entsprechend den beiden Schenkeln des U-förmigen-Querschnitts des modularen Führungswagens 20 kann die Unterschale 21 gemäß einem Ausführungsbeispiel zwei Unterschalenabschnitte 21, 21' aufweisen. Ein erster Unterschalenabschnitt 21 erstreckt sich dabei linksseitig entlang der (gedachten) Führungs- bzw. Profilschiene und ein zweiter Unterschalenabschnitt 21' erstreckt sich rechtsseitig entlang der Führungs-bzw. Profilschiene, die in Fig. 2 der Übersichtlichkeit halber nicht gezeigt ist. Die beiden Unterschalenabschnitte 21 und 21', welche sich entlang der beiden Seiten der Profilschiene erstrecken, dienen jeweils als Unterlage bzw. Aufnahme für eine endlos umlaufende Wälzkörperreihe 23 bzw. 23', die darin in Verschiebe- bzw. Längsrichtung im Wesentlichen O-förmig umlaufen können. Obwohl es aus der Fig. 2 nicht explizit hervorgeht, können die beiden links- und rechtsseitigen Unterschalenabschnitte 21, 21' mittels wenigstens eines Trägerabschnitts mit einem im Wesentlichen U-förmigen Querschnitt, der an Form und Dimensionen der Profilschiene angepasst ist, miteinander verbunden sein.

Die Unterschale bzw. deren Unterschalenabschnitte 21, 21' können gemäß einem Ausführungsbeispiel an die Form der Wälzkörper angepasste und eingeformte Laufbahnen aufweisen, die beispielsweise einen kreisbogenförmigen Querschnitt haben können, wie es in Fig. 2 auf einer profilschienenabgewandten Seite der Unterschalenabschnitte 21, 21' jeweils gut zu erkennen ist. In anderen Worten ausgedrückt können in die Unterschale, bzw. in deren Abschnitte 21, 21', Wälzkörperlaufbahnen, sowohl last- als auch rücklaufseitig, zumindest teilweise eingeformt sein. Bei dem in Fig. 2 gezeigten Ausführungsbeispiel ist beispielsweise ein (unterer) Teil der Wälzkörperlaufbahn des fiihrungsschienenabgewandten Rücklaufkanals in die Unterschale 21 bzw. 21' kreisbogenförmig eingeformt. Bezüglich des führungsschienenzugewandten Lastkanals können in die Unterschalenabschnitte 21, 21' profilschienenseitig angeordnete Wälzkörperrückhalteborde 27 bzw. 27' in die Unterschale eingeformt sein, um die Wälzkörper der Wälzkörperreihe 23 bzw. 23' jeweils verliersicher zu halten.

Gemäß einem weiteren Ausführungsbeispiel kann die Unterschale bzw. deren links-und rechtsseitig angeordnete Unterschalenabschnitte 21, 21' jeweils ein Material umfassen, welches ausgebildet ist, um ein Wälzkörperschmiermittel, wie z.B. Schmierfett oder -öl, zu speichern und während des Betriebs kontinuierlich an die Wälzkörper der umlaufenden Wälzkörperreihen 23, 23' abzugeben. Dabei kann es sich beispielsweise um ein poröses oder schwammartiges Material handeln, welches die Schmiermittel speichert und an die Wälzkörper weitergibt. Dazu können in die Unterschalenabschnitte 21 bzw. 21' schmiermittelspeichemde Bereiche eingearbeitet sein, so dass, wenn Wälzkörper 23, 23' an diesen Bereichen vorbei umlaufen, von dem schmiermittelspeichernden Material an die Wälzkörper Schmierstoff abgegeben werden kann. Bei dem schmiermittelspeichernden Material kann es sich beispielsweise um sogenanntes "Solid Oil" handeln. Dies ist eine poröse, ölgetränkte Polymermatrix, die im Betrieb Schmieröl an vorbeilaufende Wälzkörper freigeben kann und somit eine ausgezeichnete Schmierung der umlaufenden Wälzkörper und der Laufbahnen sicherstellen kann. Der Polymerwerkstoff hat eine poröse Struktur mit Millionen mikroskopisch kleiner Poren. Diese Poren sind so klein, dass eine Oberflächenspannung ausreicht, um Öl dort zurückzuhalten. Bei "Solid Oil" entfallen typischerweise 70 % des Gewichts auf ein darin gespeichertes Schmiermittel. Der ölgetränkte PolymerWerkstoff kann derart in die Unterschale 21 bzw. 21' und/oder die Oberschale 22, 22' eingearbeitet werden, dass vorbeilaufende Wälzkörper mit Schmierstoff versorgt werden können. Dabei kann ein sehr kleiner Spalt zwischen dem ölgetränkten Polymer-Werkstoffbereich und den Wälzkörpern verbleiben, der einen ungehinderten Umlauf der Wälzkörper zulässt. Das in den Spalt einsickernde Öl kann so für eine ausreichende Schmierung sorgen.

Mögliche Orte, um den porösen Polymerwerkstoff anzubringen sind in der Unterschale 21, 21' und/oder der Oberschale 22, 22' vielfältig gegeben. Belastete Wälzkörperlaufbahnen (insbesondere profilschienenseitig) sind dafür jedoch eher ungeeignet und sollten stattdessen aus gehärtetem Stahl ausgeführt sein.

Neben der ölgetränkten Polymer-Matrix sind auch andere Ausführungsformen vorstellbar, die geeignet sind, um Schmiermittel zu speichern und kontinuierlich an umlaufende Wälzkörper abzugeben. Dies könnten beispielsweise schwammartige Materialien sein. Auch mit den Wälzkörpern in Kontakt stehende Bürsten zur Schmiermittelabgabe sind vorstellbar.

Vorzugsweise können die schmiermittelspeichernden Abschnitte austauschbar bzw. auswechselbar ausgebildet sein, so dass bei verbrauchtem Schmiermittel der schmiermittelspeichernde Werkstoff einfach ersetzt bzw. ausgetauscht werden kann. In diesem Zusammenhang soll erwähnt werden, dass der schmiermittelspeichernde Werkstoff nicht notwendigerweise vollumfänglich an bzw. um eine Wälzkörperlaufbahn herum angeordnet sein muss. Ein kleiner bzw. kurzer Abschnitt, an dem die Wälzkörper bei jedem Umlauf vorbei laufen, ist gemäß Ausführungsbeispielen ebenfalls ausreichend.

Gemäß einem weiteren Ausführungsbeispiel kann die Unterschale bzw. deren Abschnitte 21, 21' beispielsweise auch (zumindest teilweise) aus einem stabileren Material, wie z. B. Kunststoff oder auch Metall (z.B. Alu, Zn-Druckguss), bestehen, um z. B. einen Verstärkungsrahmen auszubilden und damit den Führungswagen 20 stoßunempfindlicher zu machen. Auch eine Empfindlichkeit gegenüber Röntgen- und/oder Hitzestrahlung kann damit verbessert werden und Einsätze unter solchen Bedingungen ermöglichen. Die Unterschale 21, 21' kann also ein Material aufweisen, welches ausgebildet ist, um die Unterschale 21, 21' gegenüber übrigen (Gehäuse-) Bauteilen des modularen Führungswagens 20 zu verstärken bzw. beständiger zu machen. Dabei kann es sich beispielsweise um einen besonders gehärteten Kunststoff oder auch ein Metall handeln.

Einen weiteren Bestandteil des modular aufgebauten Führungswagens 20 bzw. dessen Gehäuses bildet die Oberschale 22. Diese kann, entsprechend der beiden Unterschalenabschnitte 21, 21', ebenfalls zwei Oberschalenabschnitte 22 und 22' aufweisen, so dass sich ein erster, dem ersten Unterschalenabschnitt 21 zugeordneter Oberschalenabschnitt 22 linksseitig und ein zweiter, dem zweiten Unterschalenabschnitt 21' zugeordneter Oberschalenabschnitt 22' rechtsseitig entlang der Führungsschiene der wälzgelagerten Linearführung erstrecken kann. Dabei ist zwischen den jeweils einander zugeordneten Unter- und Oberschalenabschnitten 21, 22 und 21', 22' jeweils wenigstens eine endlos umlaufende Wälzkörperreihe 23 bzw. 23' angeordnet, um den Führungswagen 20 sowohl links- als auch rechtsseitig der Führungsschiene gegenüber dieser abzustützen.

Auch die Oberschalenabschnitte 22, 22' können gemäß einem bevorzugten Ausführungsbeispiel an die Wälzkörperoberflächen, d.h. an deren Geometrie, angepasste Abschnitte aufweisen, um, im Zusammenspiel mit Unterschale 21, 21' und Eingriff 25 die Wälzkörperkanäle (Last-, Umlenk- und Rücklaufkanal) des modular aufgebauten Führungswagens 20 auszubilden. So ist in dem anhand von Fig. 2 gezeigten Ausführungsbeispiel in der Oberschale 22, 22' profilschienenseitig ebenfalls jeweils ein Wälzkörperrückhaltebord 28, 28' vorgesehen, um die Wälzkörper der Wälzkörperreihen 23, 23' auch ohne Profilschiene auf ihren jeweiligen Laufbahnen verliersicher halten zu können. Rücklaufkanalseitig weist die Oberschale 22, 22' einen kreissegmentförmig gekrümmten Abschnitt 29, 29' auf, der beispielsweise an die sphärische Kugeloberfläche der Wälzkörper 23 angepasst ist, und somit im Zusammenspiel mit Unterschale 21, 21' und Eingriff 25 den Wälzkörperrücklaufkanal bildet. Ferner können rücklaufkanalseitig in der Oberschale 22, 22' Nasen bzw. Vorsprünge vorgesehen sein, die in den Führungswagenkörper 24 bzw. in die Unterschale 21, 21' eingreifen können, um jeweils eine form- und/oder kraftschlüssige Verbindung, wie z. B. eine Klemm- oder Schnappverbindung, einzugehen.

Entsprechend dem im Wesentlichen U-förmigen Querschnitt des gesamten modular aufgebauten Führungswagens 20 kann der gemäß Ausführungsbeispielen massiv ausgebildete Führungswagenkörper bzw. -korpus 24 bzw. dessen Eingriffe bzw. Eingriffsschenkel 25, 25' ebenso einen im Wesentlichen U-förmigen-Querschnitt aufweisen, so dass die Eingriffsschenkel 25, 25' sowohl links- als auch rechtsseitig der Öffnung für die Führungs-bzw. Profilschiene im Wesentlichen von oben in die Oberschalen- 22, 22' und/oder in die Unterschalenabschnitte 21, 21' sowie zwischen die Wälzkörper der Wälzkörperreihen 23, 23' eingreifen können, um mittels der Eingriffsschenkel 25, 25' sowohl links- als auch rechtsseitig einen Lastkanal und einen Rücklaufkanal für die Wälzkörper der endlos umlaufenden Wälzkörperreihen 23, 23' räumlich voneinander zu trennen. In anderen Worten ausgedrückt, werden durch das Zusammenspiel von (profilierter) Unterschale 21, 21', (profilierter) Oberschale 22, 22' und (profiliertem) Eingriff bzw. Eingriffsschenkel 25, 25' die Wälzkörperkanäle, d. h. Last- und Rücklaufkanal, gebildet, wobei die Eingriffsschenkel 25, 25' Last- und Rücklaufkanal räumlich voneinander trennen.

Die Eingriffsschenkel 25, 25' des Führungswagenkörpers 24 können dabei derart ausgebildet sein, dass sie, im Zusammenspiel mit Unter- und/oder Oberschale, die geometrische Form der Wälzkörperkanäle bestimmen. So ist gemäß dem in Fig. 2 gezeigten Ausführungsbeispiel ein Eingriffsschenkel 25, 25' derart geformt, dass er mittels der profilierten, rinnenartigen Abschnitte 26 einen profilschienenabgewandten Teil des Lastkanals bildet. Des Weiteren können die Eingriffe 25, 25' jeweils derart geformt sein, dass sie einen oberen (profilschienenzugewandten) Teil des jeweiligen Rücklaufkanals formen. Gemäß Fig. 2 können sie dazu beispielsweise im Querschnitt an eine Kugelform der Wälzkörper angepasst sein.

Stirnseitig angeordnete (und in Fig. 2 nicht explizit gezeigte) Wälzkörperumlenkbahnen können, ebenso wie die beschriebenen Teile/Abschnitte von Lastkanal und Rücklaufkanal, einteilig mit dem Führungswagenkörper 24 ausgebildet und somit in den Führungs- bzw. Wagenkörper 24 integriert sein, so dass ein kontinuierlicher Übergang zwischen Lastkanal und den Wälzkörperumlenkbahnen und auch zwischen Rücklaufkanal und den Wälzkörperumlenkbahnen ausgebildet ist. Auf den Wälzkörperumlenkbahnen rollen die Wälzkörper 23, 23' während des Übergangs von Lastkanal zu Rücklaufkanal und, umgekehrt, während des Übergangs von Rücklaufkanal zu Lastkanal ab. Demgemäß können die Eingriffsschenkel 25, 25' des Wagenkörpers 24 bezüglich ihrer Formgebung auf die Form der Wälzkörper abgestimmt sein und können insbesondere kreisbogenförmige Querschnitte im Bereich der Wälzkörperkanäle aufweisen.

Durch die anhand von Fig. 2 beschriebene modulare Bauweise des Führungswagens 20 ergibt sich, wie im Folgenden noch näher erläutert wird, neben einer möglichen vorteilhaften Schmierung von umlaufenden Wälzkörperreihen, auch eine erhöhte Flexibilität bezüglich eines Bedarfs an zusätzlichen, lastabhängigen Wälzkörperreihen bzw. Wälzkörperumlaufebenen.

Nach dem anhand von Fig. 2 ein Ausführungsbeispiel für einen modular aufgebauten zweireihigen Führungswagen mit Ober- und Unterschale, sowie Führungswagenkörper mit Eingriffen beschrieben wurde, werden nachfolgend anhand der weiteren Figuren Ausführungsbeispiele von vier- bzw. sechsreihigen Führungswagen erläutert, welche durch die modulare Bauweise auf einfache Weise, ausgehend von dem zweireihigen modularen Führungswagen 20, aufgebaut werden können. Dabei handelt es sich also um Führungswagen mit insgesamt vier bzw. sechs endlos umlaufenden Wälzkörperreihen in unterschiedlichen, übereinanderliegenden Wälzkörperumlaufebenen.

Wie es aus der nachfolgenden Beschreibung noch deutlich werden wird, können durch die vorteilhafte modulare Bauweise vier- bzw. mehrreihige Führungswagen durch Einbringen von zusätzlichen Zwischenebenen bzw. Zwischenschalen zwischen die Ober- und Unterschale sehr aufwandsgünstig realisiert werden.

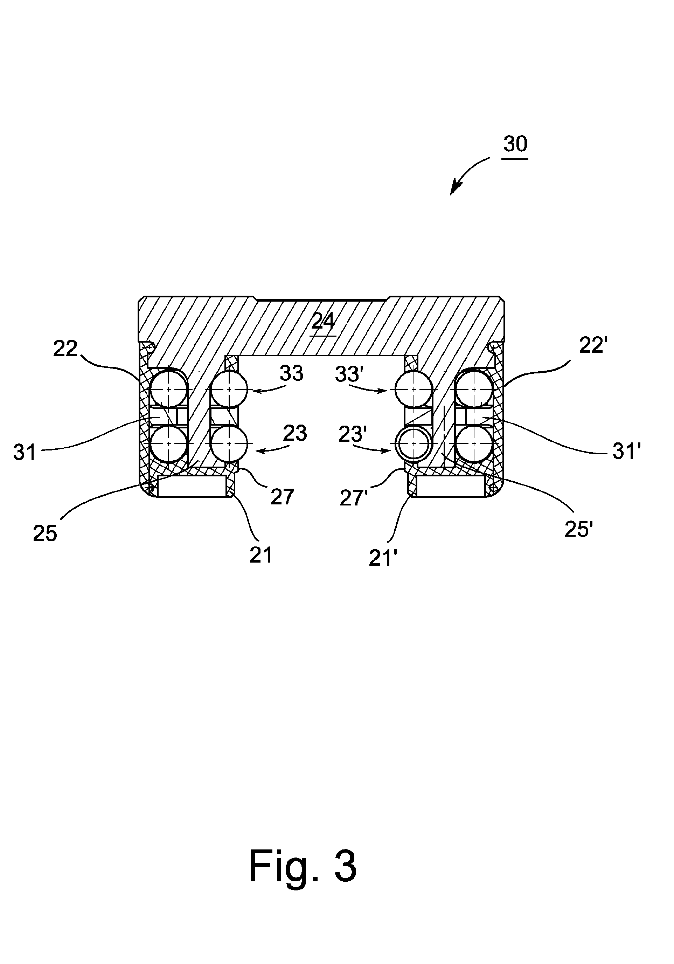

Der anhand von Fig. 3 gezeigte modulare Führungswagen 30 unterscheidet sich von dem anhand von Fig. 2 detailliert beschriebenen modularen Führungswagen 20 durch das Vorhandensein von zwei weiteren, vertikal oberhalb der beiden Wälzkörperreihen 23, 23' angeordneten und links- und rechtsseitig der Führungsschiene endlos umlaufenden Wälzkörperreihen 33, 33'. Der Führungswagen 30 ist also ein vierreihiger Führungswagen mit zwei übereinander angeordneten Wälzkörperumlaufebenen. Diese zusätzlichen Wälzkörperreihen 33, 33' werden von den unteren Wälzkörperreihen 23, 23' jeweils durch eine zusätzlich eingebrachte Zwischenschale 31 bzw. 31' getrennt. D. h., gemäß Ausführungsbeispielen kann zwischen der Unterschale 21 und der Oberschale 22 eine Zwischenschale 31, 31' angeordnet sein, so dass zwischen der Unterschale und 21, 21' und der darüber befindlichen Zwischenschale 31, 31' eine erste endlos umlaufende Wälzkörperreihe 23, 23' angeordnet werden kann und, so dass zwischen der Zwischenschale 31, 31' und der darüber befindlichen Oberschale 22, 22' oberhalb der ersten Wälzkörperreihe 23, 23' eine zweite umlaufende Wälzkörperreihe 33, 33' angeordnet werden kann. Der Eingriff 25, 25' ist gemäß Ausführungsbeispielen ausgebildet, um in die Zwischenschale 31, 31' und auch jeweils in bzw. zwischen die erste Wälzkörperreihe 23, 23' und die darüber liegende zweite Wälzkörperreihe 33, 33' einzugreifen, um in einem montierten Zustand des Führungswagens 30 einen Lastkanal und einen Rücklaufkanal für die Wälzkörper der ersten und zweiten endlos umlaufenden Wälzkörperreihe räumlich voneinander zu trennen, derart, dass vermittels der Unterschale 21, 21', der Zwischenschale 31, 31', der Oberschale 22, 22' und dem Eingriff 25, 25' des Führungswagenkörpers 24 in montiertem Zustand wenigstens zwei übereinanderliegende, geschlossene Wälzkörperkanäle für die Wälzkörper der ersten und der zweiten endlos umlaufenden Wälzkörperreihe gebildet werden.

Dabei können in die Zwischenschale bzw. deren Zwischenschalenabschnitte 31, 31' Wälzkörperlaufbahnen bzw. Laufbahnabschnitte, die an die Form der darauf abrollenden Wälzkörper angepasst sind, eingeformt sein. Auf derartigen Wälzkörperlaufbahnen können die Wälzkörper auf der Zwischenschale 31, 31' in Verschiebe- bzw. Längsrichtung wiederum im Wesentlichen O-förmig um die Eingriffsschenkel 25, 25', die in die Zwischenschalenabschnitte 31, 31' eingreifen können, herumlaufen. Gemäß einem Ausführungsbeispiel laufen die Wälzkörper dabei um eine in Verschieberichtung länglich ausgebildete Öffnung der Zwischenschale 31, 31' herum, in welche die Eingriffsschenkel 25, 25' beispielsweise von oben eingreifen können, um quasi eine Trennwand zwischen profilschienenseitigen Tragkanal und profilschienenabgewandten Rücklaufkanal zu bilden.

Des Weiteren können insbesondere die profilschienenseitigen Abschnitte der Zwischenschale 31, 31' Wälzkörperrückhalteborde aufweisen, um zu verhindern, dass die (ober- und/unterhalb der Zwischenschale 31, 31' befindlichen) Wälzkörper des Führungswagens 30 aus ihren Wälzkörperkanälen fallen.

Ebenso wie die Unterschale 21, 21' für die unteren Wälzkörperreihen 23, 23' ein Material aufweisen kann, welches ausgebildet ist, um Schmiermittel zu speichern und kontinuierlich an die Wälzkörper abzugeben, kann es sich für die Zwischenschale bzw. deren Abschnitte 31, 31' verhalten. D. h., gemäß einem Ausführungsbeispiel der vorliegenden Erfindung kann die Zwischenschale 31, 31' also zumindest abschnittsweise ein Material aufweisen, welches ausgebildet ist, um Schmiermittel zu speichern und kontinuierlich an die Wälzkörper der darauf umlaufenden Wälzkörperreihe 33 bzw. 33' abzugeben, derart, wie es im Vorhergehenden für die Unterschale 21, 21' bereits detailliert beschrieben wurde. Ähnliches gilt im Übrigen auch für Ausführungsformen der Oberschale 22, 22'.

Zusätzlich oder alternativ kann die Zwischenschale 31, 31' (wie auch die Oberschale 22, 22') ebenfalls ein Material aufweisen, welches ausgebildet ist, um die Zwischenschale 31, 31' (Oberschale 22, 22') gegenüber übrigen (Gehäuse-) Bauteilen des Führungswagens 30 zu verstärken bzw. beständiger zu machen. Dabei kann es sich beispielsweise um besonders gehärteten Kunststoff oder auch ein Metall (z.B. Alu, Zn-Druckguss) handeln, welches zumindest abschnittsweise in die Zwischenschale 31, 31' eingebracht sein kann.

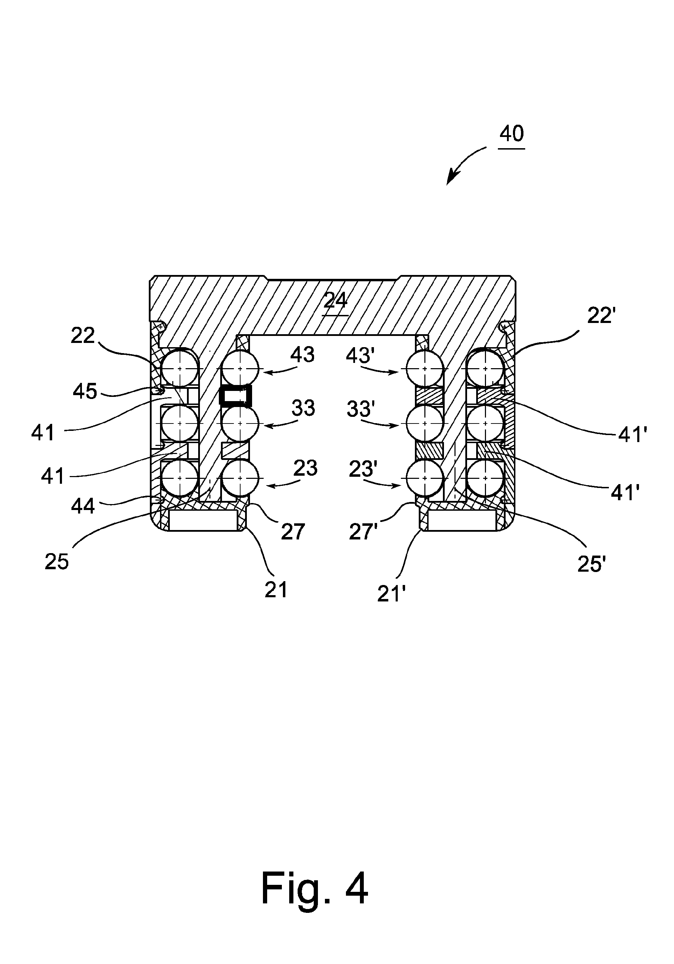

Ein weiteres Ausführungsbeispiel für einen Führungswagen 40 ist in Fig. 4 in einer schematischen Querschnittsansicht durch eine Mitte des Führungswagens 40 in Verschieberichtung dargestellt.

Bei dem Führungswagen 40 handelt es sich um einen sechsreihigen Führungswagen, bei dem auf jeder Seite der (nicht dargestellten) Führungsschiene jeweils drei vertikal übereinander angeordnete endlos umlaufende Wälzkörperreihen 23, 33, 43 (links) und 23', 33' und 43' (rechts) angeordnet sind. Entsprechend umfasst er drei vertikal übereinanderliegende Wälzkörperumlaufebenen. Ähnlich wie bei dem Ausführungsbeispiel der Fig. 3, sind zwischen den untersten Wälzkörperreihen 23, 23' und den mittleren Wälzkörperreihen 33, 33' jeweils Zwischenschalen 41, 41' eingebracht, welche die unteren Wälzkörperreihen 23, 23' und die mittleren Wälzkörperreihen 33, 33' vertikal voneinander separieren, gleichzeitig als Unterlage für die mittleren Wälzkörperreihen 33,33' dienen und in die in vorteilhafter Weise entsprechende Wälzkörperlaufflächen eingeformt sein können. Weitere zu den Zwischenschalenabschnitten 41, 41' identisch bzw. im höchsten Maße ähnlich ausgebildete Zwischenschalenabschnitte 41, 41' sind oberhalb der mittleren Wälzkörperumlaufebene vorgesehen, um Wälzkörper von darüber liegenden links- und rechtsseitigen Wälzkörperreihen 43, 43' einer dritten, vertikal oben liegenden Wälzkörperumlaufebene aufzunehmen. Profilschienenseitig können in die Zwischenschalen 41, 41' Wälzkörperrückhaltborde ein- bzw. angeformt sein, um die entsprechenden Wälzkörper auch bei einem nicht auf die Führungsschiene montierten Führungswagen 40 verliersicher in ihren jeweiligen Laufbahnen zu halten.

Wie es aus Fig. 4 zu erkennen ist, können die übereinander platzierten Zwischenschalen bzw. Zwischenschalenabschnitte 41, 41' identisch ausgebildet sein, so das ein Stapel von übereinander liegenden Zwischenschalen 41, 41' quasi beliebig nach oben durch weiteres Stapeln von zusätzlichen Zwischenschalen 41, 41' erweitert werden kann. Dadurch kann, je nach Anforderungen, ein in vertikaler Richtung äußerst belastbarer mehrreihiger Führungswagen modular aufgebaut werden.

Die Zwischenschalen 41, 41' können für eine form- und/oder kraftschlüssige Verbindung zwischen denselben oder mit der Unterschale 21, 21' bzw. der Oberschale 22, 22' entsprechend ausgebildete Vorsprünge bzw. Nasen 44 und Eingriffe 45 aufweisen, um die Zwischenschalen 41, 41' clipartig mit anderen Gehäuseteilen, wie Unter-, Zwischen und/oder Oberschale, zu koppeln. Gemäß Fig. 4 sind die Zwischenschalen 41, 41' mit den Unterschalen 21, 21' sowie den Oberschalen 22, 22' verschnappt, um ein Führungswagengehäuse um den massiven Führungswagenkörper 24 mit entsprechend einer Höhe des Zwischenschalenstapels verlängerten Eingriffsschenkeln 25, 25' zu bilden.

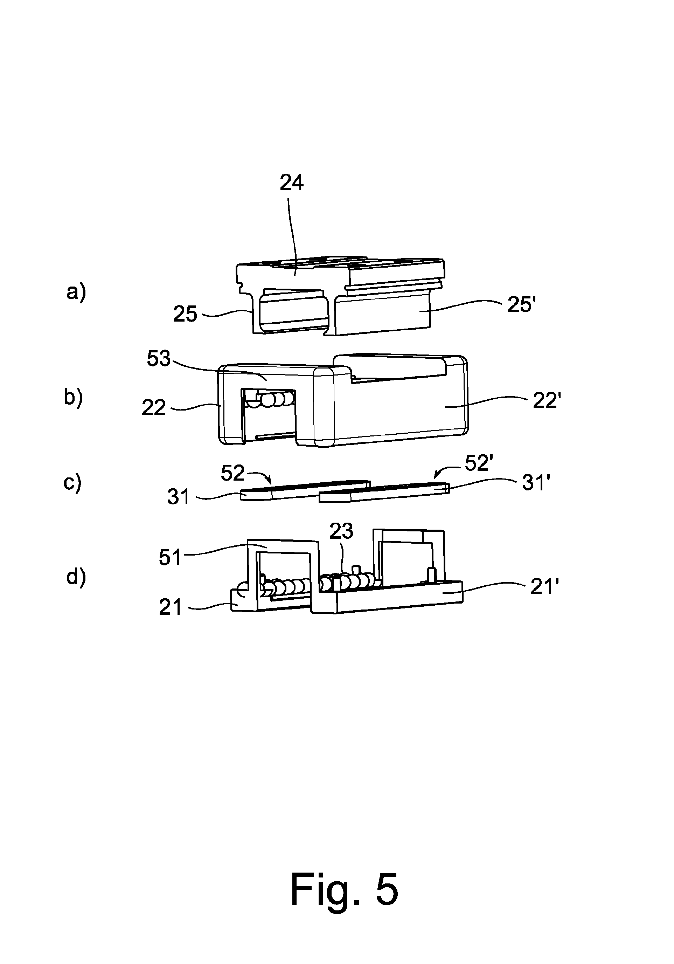

Nachdem im Vorhergehenden anhand der verschiedenen Querschnittsdarstellungen der Figuren 2 bis 4 unterschiedliche Ausführungsbeispiele von modular aufgebauten Führungswagen 20, 30, 40 beschrieben wurden, wird im Nachfolgenden anhand der perspektivischen Darstellung der Fig. 5 ein weiteres Ausführungsbeispiel der vorliegenden Erfindung in Form eines Verfahrens zum Herstellen bzw. Zusammenbauen eines modularen Führungswagens beschrieben.

Zunächst werden dazu, wie es anhand der Fig. 5b und 5d gezeigt ist, eine Unterschale und eine Oberschale bereitgestellt. Wie es im Vorhergehenden bereits beschrieben wurde, kann die Unterschale zwei Unterschalenabschnitte 21, 21' aufweisen, die mittels wenigstens eines Unterschalenträgerabschnitts 51 mit einem im Wesentlichen U-förmigen Querschnitt miteinander verbunden sind, so dass sich ein erster Unterschalenabschnitt 21 linksseitig und ein zweiter Unterschalenabschnitt 21' rechtsseitig quasi wannenartig entlang der Führungs- bzw. Profilschiene der wälzgelagerten Linearführung erstrecken kann. Die beiden Unterschalenabschnitte 21, 21' dienen jeweils zum Aufnehmen einer endlos umlaufenden Wälzkörperreihe 23, 23', die in einem weiteren Verfahrensschritt zwischen der Unterschale 21, 21' und der Oberschale 22, 22' angeordnet werden, und mittels der sich der Führungswagen 30 gegen eine (nicht gezeigte) Führungsschiene abstützen kann.

Bei mehr als zweireihigen Führungswagen, wie z. B. vier- oder sechsreihiger Ausführungsformen, wird oberhalb von auf der Unterschale 21, 21' befindlichen Wälzkörperreihen 23, 23' eine Zwischenschale bzw. deren Zwischenschalenabschnitte 31, 31' angeordnet, wie es im Vorhergehenden bereits anhand der Fig. 3 und Fig. 4 erläutert wurde. Diese Zwischenschalenabschnitte 31, 31' dienen dann als Unterlage für vertikal oberhalb der unteren Wälzkörperreihen 23, 23' befindliche weitere Wälzkörperreihen 33, 33'. Das heißt, zwischen der Unterschale 21, 21' und der Oberschale 22, 22' wird eine Zwischenschale 31, 31' angeordnet, so dass zwischen der Unterschale 21, 21' und der Zwischenschale 31, 31' eine erste, untere endlos umlaufende Wälzkörperreihe 23, 23' angeordnet werden kann, mittels der sich der Führungswagen 30, 40 gegen eine Führungsschiene abstützen kann, und, so dass zwischen der Zwischenschale 31, 31' und der Oberschale 22, 22' oberhalb der ersten Wälzkörperreihe 23, 23' eine zweite, oberhalb umlaufende Wälzkörperreihe 33, 33' angeordnet werden kann, mittels der sich der Führungswagen 30, 40 zusätzlich gegen die Führungsschiene abstützen kann. Weiterhin werden gemäß Ausführungsbeispielen zum Montieren eines einsatzfähigen, modularen Führungswagens zwischen der Unterschale 21, 21' und der Zwischenschale 31, 31' erste endlos umlaufende Wälzkörperreihen 23, 23', und, zwischen der Zwischenschale 31, 31' und der Oberschale 22, 22', zweite endlos umlaufende Wälzkörperreihen 33, 33' angeordnet.

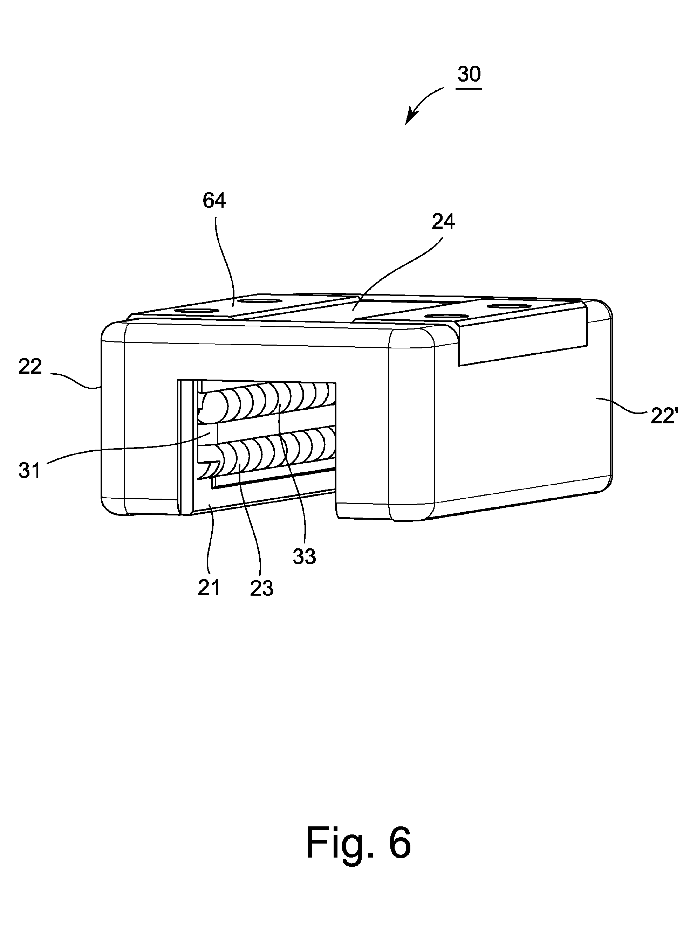

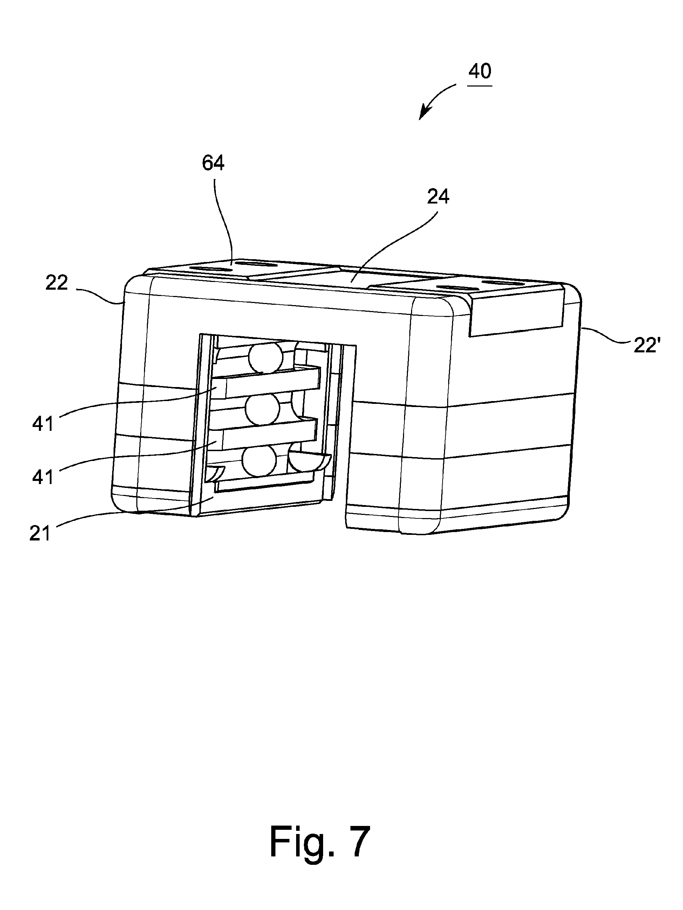

In einem weiteren Schritt des erfindungsgemäßen Verfahrens wird der Führungswagenkörper 24 mit dem Eingriff am 25, 25' in dafür vorgesehene und sich beispielsweise in Längs- bzw. Verschieberichtung erstreckende Durchlässe/Aufnahmen 52, 52' zumindest der Zwischenschale 31, 31' eingeführt, um mittels der Eingriffe 25, 25' einen Lastkanal und einen Rücklaufkanal für die Wälzkörper der endlos umlaufenden Wälzkörperreihen 23, 23', 33, 33' jeweils räumlich voneinander zu trennen, so dass vermittels der Unterschale 21, 21', der Zwischenschale 31, 31', der Oberschale 22, 22' und dem Eingriff 25, 25' des Führungswagenkörpers 24 in montiertem Zustand (siehe Fig. 6 und Fig. 7) wenigstens zwei übereinanderliegende, geschlossene Wälzkörperkanäle für die Wälzkörper der ersten 23, 23' und der zweiten endlos umlaufenden Wälzkörperreihe 33, 33' gebildet werden. Die Eingriffsschenkel 25, 25' bilden also profilierte Trennwände zwischen den profilschienenseitigen Lastkanälen und den profilschienenabgewandten Rücklaufkanälen.

Die im Vorhergehenden beschriebene Reihenfolge der Verfahrensschritte ist nicht zwingend und kann bei Ausführungsbeispielen variieren. Insbesondere können die Wälzkörper u. U. auch erst nachträglich in die Unter- und/oder Zwischenschalen eingebracht werden, nachdem die restlichen Komponenten des Führungswagens bereits zusammengesetzt wurden. Es kann aber auch zuerst eine untere Wälzkörperreihe 23, 23' in die Unterschale 21, 21' gegeben werden, bevor darüber eine Zwischenschale 31, 31' montiert wird, in welche dann wieder die zweite (obere) Wälzkörperreihe 33, 33' eingebracht werden kann, usw., so dass der Führungswagen quasi auch von unten nach oben aufgebaut werden kann.

Ein nach dem soeben beschriebenen Verfahren zusammengesetzter vierreihiger Führungswagen 30 für eine Linearführung ist zusammenfassend in einer perspektivischen Ansicht in der Fig. 6 dargestellt. Zu erkennen sind Außenbereiche der Gehäuseoberschale bzw. derer Oberschalenabschnitte 22, 22', die mittels eines Oberschalenträgerabschnitts 53 miteinander verbunden sind. Ferner ist ein vertikal oben liegender Montagebereich 64 des Führungswagenkörpers 24 zu erkennen, auf dem mit der Linearführung zu transportierende Bauteile montiert werden können. Innerhalb der perspektivisch dargestellten Öffnung oder Ausnahme für eine Profilschiene des Linearsystems sind Wälzkörper in Form von Kugeln der vertikal übereinanderliegenden und endlos umlaufenden Wälzkörperreihen zu erkennen, wobei eine untere Wälzkörperreihe 23 auf der Unterschale bzw. einen ihrer Unterschalenabschnitte 21 angeordnet ist. Die vertikal darüber liegende Wälzkörperreihe 33 wird hingegen auf der dafür vorgesehenen Zwischenschale 31 geführt und bevorzugt auf eine im Vorhergehenden beschrieben Weise mit Schmiermittel versorgt.

Eine der Fig. 7 entsprechende isometrische Ansicht des montierten sechsreihigen Führungswagens 50 ist in Fig. 7 gezeigt.

Abschließend soll der Vollständigkeit halber noch darauf hingewiesen werden, dass Ausführungsbeispiele der vorliegenden Erfindung auch ein System für eine wälzgelagerte Linearführung mit einer Führungsschiene und einem modular aufgebauten Führungswagen 20, 30, 40 gemäß Ausführungsbeispielen der vorliegenden Erfindung vorsehen.

### Bezugszeichenliste

- 10: Profilschienenführung
- 11: Wälzkörper
- 12: Profilschiene
- 13: Führungswagen
- 14: Wälzkörperreihe
- 16: Trag-, Lastkanal
- 17: Rücklaufkanal
- 18: Wälzkörperlaufbahn
- 20: zweireihiger modularer Führungswagen
- 21: Unterschale, Unterschalenabschnitt
- 22: Oberschale, Oberschalenabschnitt
- 23: endlos umlaufende Wälzkörperreihe
- 24: Führungsteil bzw. -modul
- 25: Eingriff, Eingriffsschenkel
- 26: Rinnenabschnitt
- 27: Wälzkörperrückhaltebord in Unterschale
- 28: Wälzkörperrückhaltebord in Oberschale
- 29: gekrümmter Oberschalenabschnitt
- 30: vierreihiger modularer Führungswagen
- 31: Zwischenschale, Zwischenschalenabschnitt
- 33: endlos umlaufende Wälzkörperreihe
- 40: sechsreihiger modularer Führungswagen
- 41: Zwischenschale, Zwischenschalenabschnitt
- 43: endlos umlaufende Wälzkörperreihe
- 44: Nase
- 45: Eingriff, Vertiefung
- 51: Unterschalenträgerabschnitt
- 52: Öffnung in Zwischenschale für Eingriff
- 53: Oberschalenträgerabschnitt
- 64: Montagebereich

## Patentansprüche

1. Ein Führungswagen (30; 40) für eine wälzgelagerte Linearführung, mit folgenden Merkmalen:
einer Unterschale (21; 21');
einer Oberschale (22; 22');
einer Zwischenschale (31; 31'; 41; 41'), die derart zwischen der Unterschale (21; 21') und der Oberschale (22; 22') angeordnet ist, so dass zwischen der Unterschale (21; 21') und der Zwischenschale (31; 31'; 41; 41') eine erste endlos umlaufende Wälzkörperreihe (23; 23') angeordnet werden kann und, so dass zwischen der Zwischenschale (31; 31'; 41; 41') und der Oberschale (22; 22') oberhalb der ersten Wälzkörperreihe (23; 23') eine zweite umlaufende Wälzkörperreihe (33; 33') angeordnet werden kann; und
einem Führungswagenkörper (24) mit einem Eingriff (25; 25'), der ausgebildet ist, um in einem montierten Zustand des Führungswagens (30; 40) einen Lastkanal und einen Rücklaufkanal für die Wälzkörper der ersten und zweiten endlos umlaufenden Wälzkörperreihe (23; 23'; 33; 33') jeweils räumlich voneinander zu trennen,
so dass vermittels der Unterschale (21; 21'), der Zwischenschale (31; 31'; 41; 41'), der Oberschale (22; 22') und dem Eingriff (25; 25') des Führungswagenkörpers (24) in montiertem Zustand wenigstens zwei übereinanderliegende, geschlossene Wälzkörperkanäle für die Wälzkörper der ersten (23; 23') und der zweiten endlos umlaufenden Wälzkörperreihe (33; 33') gebildet werden.

2. Der Führungswagen (30; 40) nach Anspruch 1, wobei die Unterschale (21; 21'), die Oberschale (22; 22'), die Zwischenschale (31; 31'; 41; 41') und der Führungswagenkörper (24) separate Module des Führungswagens (30; 40) sind.

3. Der Führungswagen (30; 40) nach einem der vorhergehenden Ansprüche, wobei die Unterschale (21; 21') und/oder die Zwischenschale (31; 31'; 41; 41') und/oder die Oberschale (22; 22') zumindest abschnittsweise ein Material aufweist, welches ausgebildet ist, um Schmiermittel zu speichern und an daran vorbeilaufende Wälzkörper abzugeben.

4. Der Führungswagen (30; 40) nach einem der vorhergehenden Ansprüche, wobei die Unterschale (21; 21') und/oder die Zwischenschale (31; 31'; 41; 41') ein Material aufweist, welches ausgebildet ist, um die Unterschale (21; 21') und/oder die Zwischenschale (31; 31'; 41; 41') gegenüber übrigen Bauteilen des Führungswagens (30; 40) zu verstärken.

5. Der Führungswagen (30; 40) nach einem der vorhergehenden Ansprüche, wobei die Unterschale zwei Unterschalenabschnitte (21; 21') aufweist, die mittels wenigstens eines Trägerabschnitts (51) mit einem im Wesentlichen U-förmigen Querschnitt miteinander verbunden sind, so dass sich ein erster Unterschalenabschnitt (21) linksseitig und ein zweiter Unterschalenabschnitt (21') rechtsseitig entlang der Führungsschiene in Verschieberichtung erstrecken kann.

6. Der Führungswagen (30; 40) nach Anspruch 5, wobei die Oberschale zwei Oberschalenabschnitte (22; 22') aufweist, so dass sich ein erster dem ersten Unterschalenabschnitt (21) zugeordneter Oberschalenabschnitt (22) linksseitig und ein zweiter dem zweiten Unterschalenabschnitt (21') zugeordneter Oberschalenabschnitt (22') rechtsseitig entlang der Führungsschiene in Verschieberichtung erstrecken kann, wobei zwischen den jeweils einander zugeordneten Unter- und Oberschalenabschnitten (21; 22; 21'; 22') wenigstens eine endlos umlaufende Wälzkörperreihe (23; 23'; 33; 33') angeordnet werden kann, um den Führungswagen (20; 30) links- und rechtsseitig gegen die Führungsschiene abzustützen.

7. Der Führungswagen (30; 40) nach einem der vorhergehenden Ansprüche, wobei der Eingriff (25; 25') des Führungswagenkörpers (24) einen im Wesentlichen U-förmig ausgebildeten Querschnitt mit zwei Eingriffsschenkeln (25; 25') aufweist, um links-und/oder rechtsseitig zu einer Führungsschiene in die Oberschale (22; 22') und/oder die Zwischenschale (31; 31'; 41; 41') und/oder die Unterschale (21; 21') einzugreifen und links- und rechtsseitig jeweils einen Lastkanal und einen Rücklaufkanal einer endlos umlaufenden Wälzkörperreihe räumlich voneinander zu trennen.

8. Eine wälzgelagerte Linearführung mit Führungsschiene und Führungswagen (30; 40) nach einem der vorhergehenden Ansprüche.

9. Ein Verfahren zum Herstellen eines Führungswagens (30; 40) für eine wälzgelagerte Linearführung, mit folgenden Schritten:
Bereitstellen einer Unterschale (21; 21') und einer Oberschale (22; 22');
Anordnen, zwischen der Unterschale (21; 21') und der Oberschale (22; 22'), einer Zwischenschale (31; 31'; 41; 41'), so dass zwischen der Unterschale (21; 21') und der Zwischenschale (31; 31'; 41; 41') eine erste endlos umlaufende Wälzkörperreihe (23; 23') angeordnet werden kann, mittels der sich der Führungswagen (30; 40) gegen eine Führungsschiene abstützen kann, und, so dass zwischen der Zwischenschale (31; 31'; 41; 41') und der Oberschale (22; 22') oberhalb der ersten Wälzkörperreihe (23; 23') eine zweite umlaufende Wälzkörperreihe (33; 33') angeordnet werden kann, mittels der sich der Führungswagen (30; 40) gegen die Führungsschiene abstützen kann;
Anordnen, zwischen der Unterschale (21; 21') und der Zwischenschale (31; 31'), der ersten endlos umlaufenden Wälzkörperreihe (23; 23'), und, zwischen der Zwischenschale (31; 31') und der Oberschale (22; 22'), der zweiten endlos umlaufenden Wälzkörperreihe (33; 33'); und
Anordnen eines Führungswagenkörpers (24) mit einem Eingriff (25; 25'), so dass mittels des Eingriffs (25; 25') in einem montierten Zustand des Führungswagens (30; 40) ein Lastkanal und ein Rücklaufkanal für die Wälzkörper der ersten und zweiten endlos umlaufenden Wälzkörperreihe (23; 23'; 33; 33') jeweils räumlich voneinander getrennt werden kann,
so dass vermittels der Unterschale (21; 21'), der Zwischenschale (31; 31'; 41; 41'), der Oberschale (22; 22') und dem Eingriff (25; 25') des Führungswagenkörpers (24) in montiertem Zustand wenigstens zwei übereinanderliegende, geschlossene Wälzkörperkanäle für die Wälzkörper der ersten (23; 23') und der zweiten endlos umlaufenden Wälzkörperreihe (33; 33') gebildet werden.

10. Das Verfahren nach Anspruch 9, wobei durch Anordnen einer weiteren Zwischenschale ober- oder unterhalb der Zwischenschale (31; 31'; 41; 41') eine weitere Wälzkörperumlaufebene für eine weitere endlos umlaufende Wälzkörperreihe (43; 43') zwischen der Unterschale (21; 21') und der Oberschale (22; 22') gebildet wird.
